# EUROPEAN PATENT SPECIFICATION

(11) **EP 1 603 050 B1**
(45) Date of publication and mention of the grant of the patent: **22.10.2008**
(21) Application number: 04013012.2
(22) Date of filing: 02.06.2004
(51) Int. Cl.: G06F 13/40

(54) **Portable electronic system and accessing method thereof**
Tragbares elektronisches System und entsprechendes Zugriffsverfahren
Système électronique et procédé de l'accès

(43) Date of publication of application: 07.12.2005
(73) Proprietor: High Tech Computer Corp., Taoyuan (TW)
(72) Inventor: Chen, Ren-Peng, Taipei County Taiwan 231 (TW); Liu, Wan-Hsieh, Taipei County Taiwan 231 (TW); Hsu, Shih-Ming, Taipei County Taiwan 231 (TW); Kuan, Tsung-Pao, Taipei County Taiwan 231 (TW); Lee, Chi-Feng, Taipei County Taiwan 231 (TW)
(74) Representative: Müller - Hoffmann & Partner

(56) References cited:
- US-A- 5 761 443
- US-A- 5 781 748
- US-A- 5 826 048
- US-B1- 6 212 590

## Description

### BACKGROUND OF THE INVENTION

### Field of the Invention

The invention relates in general to a portable electronic system, and more particularly a multi-function high speed bus with less number of pins and the accessing method of the portable electronic system.

### Description of the Related Art

The advance of technology matures the development of portable electronic devices. For example, portable electronic devices are designed with size decreasing and function increasing. Portable electronic devices, such as mobile phones, personal digital assistants (PDAs), or PDA mobile phones serve to provide communication, information looking up, and entertainment. The busy modern people require more and more readily accessible information, and therefore, portable electronic devices are becoming an indispensable necessity for the life of modern people.

The design of portable electronic device, for example PDA, is usually small and light for easy carrying. Expansion pack is used when other expansion device, such as memory card, network card, or data card, is required. The Interface between the electronic device and the expansion pack can be, for example, PCMCIA/CF or variable latency I/O (VLIO). Due to the widespread usage of PDAs, manufactures try to develop different kinds of expansion devices, which adopt PCMCIA/CF interface or VLIO Interface, in order to supply expandable function to the users.

However, the size of the connector required by both the VLIO Interface and the PCMCIA/CF interface is too large, and does not fit in well with the trend to go smaller and lighter for portable electronic devices. The VLIO interface, which is the Interface used by INTEL Xscale processor, includes 8 control lines, 32 data lines, and 26 address lines - there are totally 66 lines required by the VLIO interface, and the size of the connector between the electronic device and the expansion pack is very large. The PCMCIA/CF interface also requires many transmission lines and its connector is very large, too.

The prior art document US 5,761,443 discloses a computer system with a multi-transaction peripheral bus with multiplexed address and data lines.

### SUMMARY OF THE INVENTION

It is therefore an object of the invention to provide a method and apparatus in a portable electronic device. The portable electronic device is equipped with multi-function high speed bus and less number of pins. The system is compatible with existing expansion devices.

The invention achieves one of the above-identified objects by providing a portable electronic device equipped with multi-function high speed bus. The portable electronic device includes a main electronic apparatus for connecting to an expansion device through an expansion pack. The main electronic apparatus includes a central processing unit (CPU), a first system bus, a host controller, and a multi-function high speed (MFHS) bus. The first system bus is electrically connected to the CPU and has P signal lines, where P is a positive integer. The MFHS bus includes Q signal lines, where Q is a positive integer and Q<P. The host controller communicates with the CPU through the first system bus, and communicates with the expansion pack through the MFHS bus. The host controller bridges the P signals on the first system bus and the Q signals on the MFHS bus. The host controller transmits M clock signals of the first system bus to the MFHS bus in N clock cycles, where N is a positive integer and N>M.

The invention achieves another above-identified object by providing a method which is applied to the above-mentioned portable electronic device. Firstly, the CPU transfers a first command address cycle to the first system bus. The host controller then receives the first command address cycle from the first system bus in M clock cycles. Following that, the host controller transforms the first command address cycle into a second command address cycle and transfers the second command address cycle in N clock cycles through the multi-function high speed bus, thereby the status signal is enabled, where N>M. Thus the client controller is enabled to receive the second command address cycle. The client controller then transforms the second command address cycle into a third command address cycle and the third command address cycle is transferred to the second system bus in K clock cycles. Finally, the second system bus transfers the third command address cycle to the expansion device.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a diagram of a portable electronic device according to the preferred embodiment of the invention.

FIG. 2A shows the content of the command address cycle of the multi-function high speed bus.

FIG. 2B shows the content of the data reading cycle of the multi-function high speed bus.

FIG. 2C shows the content of the data writing cycle of the multi-function high speed bus.

FIG. 3 is the flow chart for the reading cycle when the multi-function high speed bus is used.

FIG. 4 is the flow chart for the write cycle when the multi-function high speed bus is used.

FIG. 5 is the flow chart of the burst write cycle when the multi-function high speed bus is used.

### DETAILED DESCRIPTION OF THE INVENTION

There are a number of transmission lines in the widely used interfaces, such as VLIO or PCMCIA/CF, and hence the size of the connector is large. The conventional interfaces and connector does not fit in well with the trend to go smaller and lighter for portable electronic devices. A bus with less number of pins and is compatible with existing expansion pack is required in order to reduce the size of the connector.

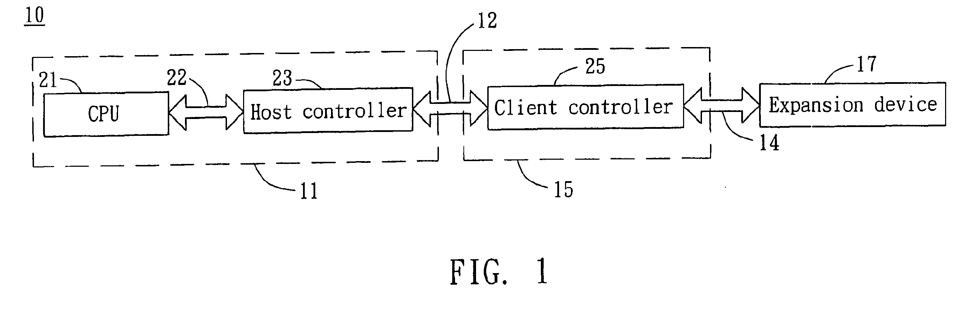

Please refer to FIG. 1 that is a diagram of a portable electronic device according to the preferred embodiment of the invention. The portable electronic device 10 includes an electronic apparatus 11, an expansion pack 15, and an expansion device 17. The electronic apparatus 11 is, for example, a personal digital assistant (PDA). By connecting the expansion pack 15 and the expansion device 17, functions of the expansion device 17 can be added to the electronic apparatus. The expansion device is, for example, a memory card, a data card, or a network card. When the electronic apparatus does not need expended function, the expansion pack 15 can be detached in order to reduce the size and the weight.

The interface between the electronic apparatus 11 and the expansion pack 15 is a multi-function high speed (MFHS) bus 12. According to the implement of the MFHS bus 12, the number of pins is reduced, and the size of the connector and the portable electronic device 10 are scaled down. The expansion pack 15 is eclectically connected to the expansion device 17 by a system bus interface 14, such as the VLIO interface or the PCMCIA/CF interface. The expansion pack 15 is compatible with existing expansion devices.

The electronic apparatus 11 includes a central process unit (CPU) 21, a system bus 22, and a host controller 23. The CPU 21 connects to the host controller 23 through the system bus 22. The host controller 23 bridges the signals between the system bus 22 and the MFHS bus 12 for communicating between the CPU 21 and the expansion pack 15.

The expansion pack 15 includes a client controller 25. The client controller 25 transmits signals of the MFHS bus 12 to signals of the system bus 14, or transmits the signals of the system bus 14 to the signals of the MFHS bus 12. The CPU 21 communicates with the expansion device 17 through the host controller 23 and the client controller 25. In this embodiment, the system buses 14 and 22 are the same standard, for example the VLIO or the PCMCIA/CF.

The MFHS bus 12 includes a clock signal line CLK, a status signal line BST, a ready signal line BRDY, and 8 content signal lines CAD[7..0]. The content signal lines CAD[7..0] transmit control signals, address signals and data signals.

The CPU 21 transfers read cycles or write cycles to perform read or write on the expansion device 17. A read cycle includes a command address cycle and a data reading cycle; a write cycle includes a command address cycle and a data writing cycle. During the write cycle of the CPU 21, the host controller 23 transfers the command address cycle, and then transfers the data writing cycle; the write cycle is completed after the expansion device 17 confirms that the data is written successfully. During the read cycle of the CPU 21, the host controller 23 transfers a command address cycle; the read cycle is completed after the expansion device sends the requested data. Different buses are used to transmit the signals for the read/write cycles mentioned above by different methods due to the different number of transmission lines.

The command address cycle includes a control signal and an address signal. The control signal includes at least an access mode signal, and a byte-enabling signal. The access mode signal represents whether this operation is read or write. The byte-enabling signal is used to control the number of byte of current read/write cycle, and it could be, for example, a byte, a word, a tri-byte, or a double-word. A data reading cycle includes a data signal that is the data sent by the expansion device 17 in reply of the requested from the command address cycle. The data writing cycle includes a data signal which is written in the expansion device 17 by the CPU 21.

The existing VLIO bus or the PCMCIA/CF bus includes more transmission lines to transmit the control signal, the address signal, and the data signal. In these existing buses, the control signal and the address signal of one command address signal is transmitted in one clock cycle. However, the number of pins is reduced according to the invention and one command address cycle is completed in a plurality of clock cycles. Similarly, in existing buses, the data reading cycle and the data writing cycle is transferred in one clock cycle with for example a 24-bit data which would require a plurality of clock cycles for the data reading cycle and data writing cycle of the invention to complete.

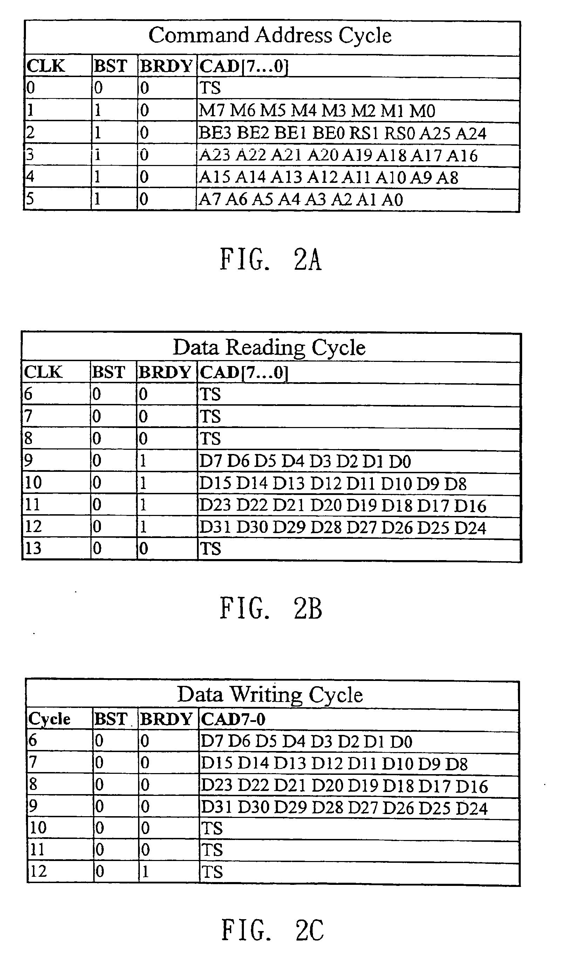

FIG. 2A shows the content of the command address cycle of the MFHS bus. When the electronic device 23 transmits a signal of the MFHS bus to the client controller 25, the status line BST is enabled, thereby the client controller 25 receives signals from the MFHS bus. In the embodiment, the command address cycle uses 5 clock cycles for transmitting the control signal and the address signal. At clock cycle 0, the transmission is not started, and the content signal lines CAD[7..0] are tri-stated (TS). At clock cycle 1, the content signal lines CAD[7..0] are general command signals M[7..0] which are the command signal. At clock cycle 2, the content signal lines CAD[7..0] are byte-enabling signals BE[3..0], reserve signals RS[1..0], and address signals A[25..24]. At clock cycle 3, the content signals lines CAD[7..0] are address signals A[23..16]. At clock cycle 4, the content signal lines CAD[7..0] are address signals A[15..8]. At clock cycle 5, the content signal lines CAD[7..0] are address signals A[7..0]. This command address cycle is used within a write cycle and a read cycle.

FIG. 2B shows the content of the data reading cycle of the MFHS bus. When the host controller 23 transfers a command address cycle of the read cycle to the client controller 25, it is a waiting status. The client controller 25 transforms the command address cycle and outputs the command address cycle to the expansion device 17. The expansion device 17 then returns the requested data to the client controller 25. The client controller 25 outputs the data reading cycle from the received data by the standard of the MFHS bus. The client controller 25 outputs the data reading cycle and enables the ready signal to acknowledge the host controller 23 that the data in the transmission lines are received. The duration between the host controller transferring the command address cycle and the host controller 23 receiving the data from the client controller 25 depends on the expansion device 17. For example, it is 3 clock cycles (clock cycle 6, 7, and 8) in this embodiment. At clock cycle 9, the content signal lines CAD[7..0] are data signals D[7..0]. At clock cycle 10, the content signal lines CAD[7..0] are data signals D[15..8]. At clock cycle 11, the content signal lines CAD[7..0] are data signals D[23..16]. At clock cycle 12, the content signal lines CAD[7..0] are data signals D[31..24]. At clock cycle 13, the transmission of data D is completed and the ready signal line (BRDY) is disabled, the content signal lines CAD[7..0] are tri-stated (TS).

FIG. 2C shows the content of the data writing cycle of the MFHS bus. When the host controller 23, in clock cycle 1 to 5, outputs the command address cycle of the writing cycle to the client controller 25, it transfers a data writing cycle. At clock cycle 6, the content signal lines CAD[7..0] are data signals D[7..0]. At clock cycle 7, the content signal lines CAD[7..0] are data signals D[15..8]. At clock cycle 8, the content signal lines CAD[7..0] are data signals D[23..16]. At clock cycle 9, the content signal lines CAD[7..0] are data signals D[31..24]. After the client controller 25 transforms the data received, the client controller 25 outputs the data to the expansion device 17 and waits for the response from the expansion device 17. The duration of the waiting is, for example, 2 clock cycles, clock cycles 10 and 11. When the expansion device 17 confirms the writing is complete, the expansion device 17 transfers a response to the client controller 25. The client controller 25 enables the ready signal line BRDY of the MFHS bus at clock cycle 12 in order to acknowledge the host controller 23 that the data writing cycle is completed.

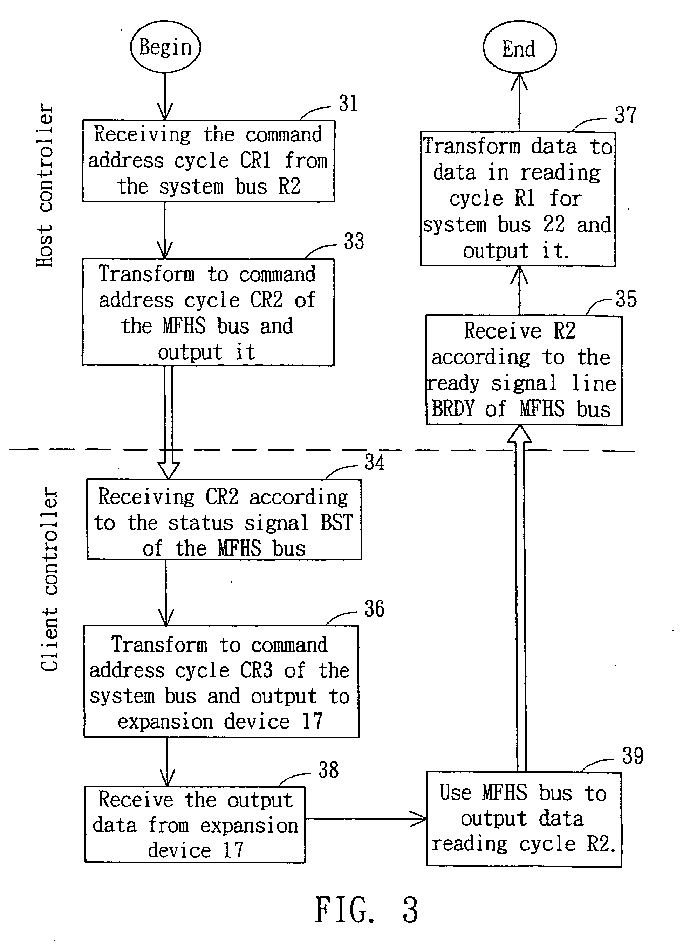

FIG. 3 is the flow chart for the reading cycle when the MFHS bus is used. In step 31, the host controller 23 receives a command address cycle CR1 from the CPU through the system bus 22. Secondly, the host controller 23 transforms the command address cycle CR1 into a command address cycle CR2 of the MFSH bus and outputs to the client controller 25 (step 33). Following that, the client controller 25, acknowledged by an enabled ready signal line BST, starts to receive a command address cycle CR2 (step 34). Then, the client controller 25 transforms the command address cycle CR2 into a command address cycle CR3 of the system bus 14 and outputs the command address cycle CR3 to the expansion device 17 (step 36). Then the client controller 25 receives the data from the expansion device 17 according to the command address cycle CR3 (step 38). The client controller 25 outputs the received data in a data reading cycle R2 of the MFHS bus (step 39). The ready signal line BRDY is then enabled. The host controller 23 receives the data according to the enabled ready signal line BRDY of the MFHS bus. Following that, the host controller 23 outputs the received data in the data reading cycle R1 to the CPU 21 (step 37), and completes the read cycle.

After finishing step 33, the host controller 23 transfers a pause command to the CPU 21 in order to prevent any read cycle or write cycle being transferred before current read cycle is completed. After the host controller 23 confirms that the requested data is received, the pause command is abandoned.

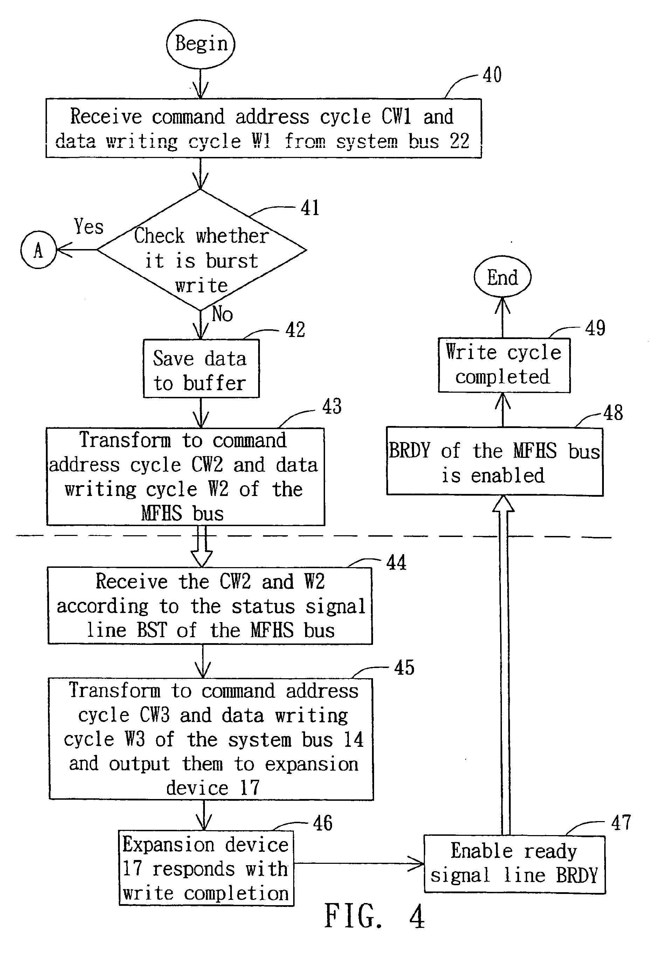

FIG. 4 is the flow chart for the write cycle when the MFHS bus is used. Firstly, the host controller 23 receives a command address cycle CW1 and a data writing cycle W1 of the writing cycle sent by the CPU 21 through the system bus 22 (step 40). Secondly, the host controller 23 checks whether the command address cycle CW1 is a burst write (step 41). If the command address cycle CW1 is a burst write, then the following step is node A, otherwise the following step is 42. In step 42, the host controller 23 saves the data of the data writing cycle W1 into a buffer. Following that, the host controller 23 transforms both the command address cycle CW1 and the data writing cycle W1 into a command address cycle CW2 and a data writing cycle W2 of the MFHS bus respectively and outputs the command address cycle CW2 and the data writing cycle W2 (step 43). The client controller 25 receives the command address cycle CW2 and the data writing cycle W2 according to the enabled status signal line of the MFHS bus (step 44). After that, the client controller 25 transforms the command address cycle CW2 and the data writing cycle W2 into a command address cycle CW3 and a data writing cycle W3 of the system bus respectively, and outputs the command address cycle CW3 and the data writing cycle W3 to the expansion device 17 (step 45). Following that, after waiting for a period of time, the client controller 25 receives the response signal after the expansion device 17 completes writing status(step 46), and then the ready signal line BRDY of the MFHS bus is enabled (step 47). After the host controller 23 detects that the ready signal line BRDY is enabled (step 48), the write cycle is completed (step 49).

When step 42 is completed, the host controller 23 transmits a pause signal to the CPU 21 in order to prevent another read or write cycle being transferred until the host controller 23 detects that the ready signal line BRDY is enabled.

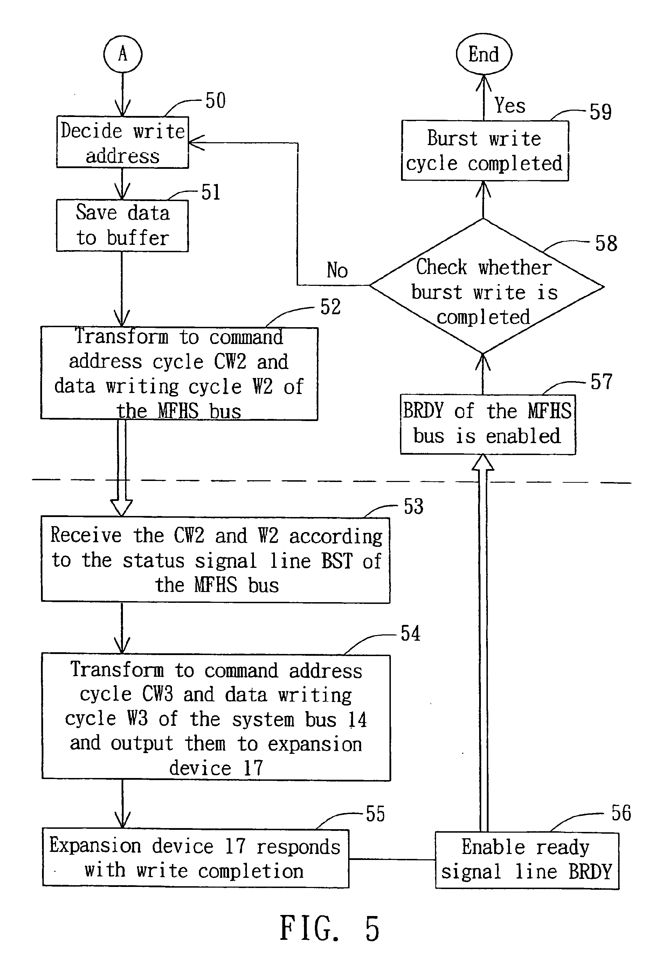

FIG. 5 is the flow chart of the burst write cycle when the MFHS bus is used. For VLIO interface, burst write, in one time, writes data in 4 batches and requires 4 transmissions for the MFHS bus of the invention. Firstly, the host controller 23 decides the write address (step 50). The host controller 23 increases the write address each time until the burst write is completed. Secondly, the data to be written is saved to the buffer (step 51). The host controller 23 then outputs the command address cycle CW2 and the data writing cycle W2 of the MFHS bus to the client controller 25 (step 52). The client controller 25 receives the command address cycle CW2 and the data writing cycle W2 according to the enabled status signal line BST of the MFHS bus(step 53). The client controller 25 transforms the command address cycle CW2 and the data writing cycle W2 into the command address cycle CW3 and data writing cycle W3 of system bus 14 and then outputs the command address cycle CW3 and data writing cycle W3 to the expansion device 17. After a period of waiting time, the client controller 25 receives a response signal for completing the write status from the expansion device 17 (step 55). The client controller 25 enables the ready signal line BRDY of the MFHS bus (step 56). The host controller 23 detects that the ready signal line BRDY is enabled (step 57). The host controller 23 then checks whether the burst write is completed. If the burst write is completed, the burst write cycle is completed otherwise the method returns to step 50, increases the write address, and continues the execution of the write cycle.

After the host controller 23 completes step 51, the host controller 23 transmits a pause signal to the CPU 21 in order to prevent another write or read cycle being transferred until the burst write cycle is completed.

The embodiment of the portable electronic device mentioned above includes at least the following advantages:
- The number of pins in the MFHS bus of the portable electronic device is less, therefore the size of the connector can be reduced resulting a smaller expansion pack which fits well with the trend for portable electronic devices to go smaller and lighter.
- The portable electronic device is compatible to and therefore can be used with existing expansion devices.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A main electronic apparatus of a portable electronic device for connecting to an expansion pack, the main electronic apparatus comprising: a central processing unit (CPU); a first system bus (22), which is electrically connected to the CPU and includes P signal lines, where P is a positive integer; a multi-function high speed (MFHS) bus with Q signal lines, where Q is a positive integer and Q<P, and a host controller for communicating with the CPU through the first system bus and communicating with the expansion pack through the MFHS bus; wherein the host controller bridges the signals on the P signal lines of the first system bus and the Q signal lines of the MFHS bus; wherein the host controller transfers M clock signals of the first system bus to the MFHS bus in N clock cycles, where N is a positive integer and N>M, wherein the expansion pack is detachably connected to the main electronic apparatus and connected to an expansion device for expanding function of the portable electronic device, and the expansion pack includes a client controller for communicating with the portable electronic device through the MFHS bus so as to reduce a size of the portable electronic device and for communicating with the expansion device through a second system bus (14), wherein the first system bus and the second systembus are of the same standard, **characterized in that** the signal lines of the MFHS bus comprises a clock signal line, a status signal line, a ready signal line, and a plurality of content signal lines, and the content signal lines transmit a control signal, an address signal and a data signal.

2. The main electronic apparatus according to claim 1, wherein the number of the content signal lines is 8.

3. The main electronic apparatus according to claim 1, wherein the host controller enables the status signal line of the MFHS bus when the host controller transfers a command address cycle to the client controller; the command address cycle includes a control signal and an address signal; the control signal includes at least a byte-enabling mode and an access mode; and the access mode is a write mode or a read mode.

4. The main electronic apparatus according to claim 1, wherein the host controller enables the status signal line of the MFHS bus when the host controller transfers a command address cycle to the client controller; and when the access mode of the control signal of the command address cycle is a read mode, the client controller transfers a data writing cycle to the host controller according to the data output from the expansion device and the ready signal line is enabled.

5. The main electronic apparatus according to claim 1, wherein the host controller enables the status signal line of the MFHS bus when the host controller transfers a command address cycle to the client controller; the command address cycle includes a control signal and an address signal; and when the access mode of the control signal is a write mode, the client controller enables the ready signal line according to the expansion device in order to indicate the write mode is completed.

6. The main electronic apparatus according to claim 1, wherein the client controller communicates with the expansion device through the second system bus which includes R signal lines, where R is a positive integer and R>Q.

7. The main electronic apparatus according to claim 6, wherein the client controller bridges the signals from the R signal lines of the second system bus and the signals from the Q signal lines of the MFHS bus.

8. A reading method of a portable electronic system with an MFHS bus, the portable electronic system including a main electronic apparatus according to claim 1, an expansion pack, and an expansion device, wherein the main electronic apparatus is connected to the expansion pack by the MFHS bus; the main electronic apparatus includes a CPU and a host controller which is connected to the CPU by a first system bus; the expansion pack includes a client controller which is connected to the host controller by the MFHS bus and is connected to the expansion device by a second system bus; and the MFHS bus includes a clock signal line, a status line, a ready signal line, and a plurality of content signal line, the reading method comprising: outputting a first command address cycle from the CPU to the first system bus; receiving the first command address cycle which is outputted from the first system bus in M clock cycles by the host controller; transforming the first command address cycle into a second command address cycle by the host controller and transferring the second command address cycle through the MFHS bus in N clock cycle, thereby enabling the status signal line of the MFHS bus, where N>M; receiving the second command address cycle by the client controller when the status signal line is enabled; transforming the second command address cycle into a third command address cycle by the client controller and transferring a third command address cycle through first set of P client signal lines in K clock cycles, where K is a positive integer; and transferring the third command address cycle to the expansion device by the second system bus.

9. The reading method according to claim 8, wherein the first command address cycle includes a control signal and an address signal; and the access mode of the control signal is a read mode.

10. The reading method according to claim 8, wherein when the host controller receives the first command address cycle, the host controller transmits a pause signal to the CPU.

11. The reading method according to claim 8 further comprising: outputting a data to the second system bus according to the third command address cycle by the expansion device; receiving the data and transforming the data into a first data reading cycle by the client controller; transferring the first data reading cycle by the MFHS bus, whereby the ready signal line of the MFHS bus is enabled; receiving the first data reading cycle according to the enabled ready-signal line of the MFHS bus by the host controller; transforming the first data reading cycle into a second data reading cycle by the host controller; and transferring the second data reading cycle to the CPU by the first system bus.

12. The reading method according to claim 11, wherein when the host controller receives the first data reading cycle, the host controller enables the CPU.

13. A writing method of a portable electronic system with an MFHS bus, the portable electronic system including a main electronic apparatus according to claim 1, an expansion pack, and an expansion device, wherein the main electronic apparatus is connected to the expansion pack by the MFHS bus; the main electronic apparatus includes a CPU and a host controller which is connected to the CPU by a first system bus; the expansion pack includes a client controller which is connected to the host controller by the MFHS bus and is connected to the expansion device by a second system bus; and the MFHS bus includes a clock signal line, a status line, a ready signal line, and a plurality of content signal line, the writing method comprising: outputting a first command address cycle and a first data writing cycle from the CPU to the first system bus; receiving the first command address cycle and the first writing cycle in M clock cycles by the host controller, where M is a positive integer; transforming the first command address cycle into a second command address cycle, transforming the first data writing cycle into a second data writing cycle by the host controller, and transferring the second command address cycle and the second data writing cycle to the MFHS bus in N clock cycles, where N is a positive integer and N>M; receiving the second command address cycle and the second data writing cycle by the client controller when the status signal line is enabled; and transforming the second command address cycle into a third command address cycle, transforming the second data writing cycle to a third data writing cycle by the client controller, and transferring the third command address cycle and the third data writing cycle through the second system bus in K clock cycles, where K is a positive integer.

14. The writing method according to claim 13 further comprising: writing the data of the third data writing cycle according to the third command address cycle by the expansion device, and responding a write completion signal to the client controller; and enabling the ready signal line of the MFHS bus according to the write completion signal by the client controller.

15. The writing method according to claim 14 further comprising: transferring a write cycle completion signal to the CPU according to the enabled ready signal line by the host controller.

16. The writing method according to claim 14, wherein when the host controller receives the first command address cycle and the first data writing cycle, the host controller transmits a pause signal to the CPU.

17. The method according to claim 16, wherein the host controller enables the CPU after the ready signal line is enabled.

18. The method according to claim 15, wherein when the host controller receives the first command address cycle and the first data writing cycle, the host controller checks whether the first command cycle and the first data writing cycle is for a burst write; and if the first command cycle and the first data writing cycle is for a burst write, the writing method is repeated to write the data of the burst write into the expansion device.

19. A writing method of a portable electronic system with an MFHS bus, the portable electronic system including a main electronic apparatus according to claim 1, an expansion pack, and an expansion device, wherein the main electronic apparatus is connected to the expansion pack by the MFHS bus; the main electronic apparatus includes a CPU and a host controller which is connected to the CPU by a first system bus; the expansion pack includes a client controller which is connected to the host controller by the MFHS bus and is connected to the expansion device by a second system bus; and the MFHS bus includes a clock signal line, a status line, a ready signal line, and a plurality of content signal line, the writing method comprising: outputting a first command address cycle and a first data writing cycle from the CPU to the first system bus, wherein the first command address cycle is a burst write cycle; receiving the first command address cycle and the first data writing cycle which are outputted from the first system bus in M clock cycles by the host controller, where M is a positive integer; deciding a write address by the host controller; transforming the first command address cycle into a second command address cycle according to the write address and transforming the first data writing cycle into a second data writing cycle by the host controller, and outputting the second command address cycle and the second data writing cycle through the MFHS bus in N clock cycles, where N is a positive integer and N>M; receiving the second command address cycle and the second data writing cycle by the client controller when the status signal line is enabled; transforming the second command address cycle into a third command address cycle, transforming the second data writing cycle into a third data writing cycle by the client controller, and transferring the third command address cycle and the third data writing cycle through the second system bus in K clock cycles, where K is a positive integer; writing the data of the third data writing cycle according to the third command address cycle by the expansion device, and responding a write completion signal to the client controller; enabling the ready signal line of the MFHS bus according to the write completion signal by the client controller; and determining whether the burst write cycle is completed by checking the enabled ready signal line by the host controller; and if the burst write cycle being not completed, returning to the step of deciding the write address; if the burst write cycle being completed, the host controller transferring a write cycle completion signal to the CPU.

20. The writing method according to claim 19, wherein when the host controller receives the first command address cycle and the first data writing cycle, the host controller transmits a pause signal to the CPU.

21. The writing method according to claim 20, wherein the host controller enables the CPU after the burst write is completed.

## Patentansprüche

1. Elektronisches Hauptgerät einer tragbaren elektronischen Vorrichtung für die Verbindung mit einem Erweiterungspack, wobei das elektronische Hauptgerät enthält: eine Zentraleinheit (CPU); einen ersten Systembus (22), der mit der CPU elektrisch verbunden ist und P Signalleitungen enthält, wobei P eine positive ganze Zahl ist; einen Multifunktions-Hochgeschwindigkeitsbus (MFHS-Bus) mit Q Signalleitungen, wobei Q eine positive ganze Zahl ist und Q < P, und eine Host-Steuereinheit für die Kommunikation mit der CPU über den ersten Systembus und für die Kommunikation mit dem Erweiterungspack über den MFHS-Bus; wobei die Host-Steuereinheit eine Brücke bildet für die Signale auf den P Signalleitungen des ersten Systembusses und auf den Q Signalleitungen des MFHS-Busses; wobei die Host-Steuereinheit M Taktsignale des ersten Systembusses an den MFHS-Bus in N Taktzyklen überträgt, wobei N eine positive ganze Zahl ist und N > M, wobei das Erweiterungspack mit dem elektronischen Hauptgerät lösbar verbunden ist und mit einer Erweiterungsvorrichtung verbunden ist, um die Funktion der tragbaren elektronischen Vorrichtung zu erweitern, und wobei das Erweiterungspack eine Client-Steuereinheit enthält, um mit der tragbaren elektronischen Vorrichtung über den MFHS-Bus zu kommunizieren, um so eine Größe der tragbaren elektronischen Vorrichtung zu reduzieren, und um mit der Erweiterungsvorrichtung über einen zweiten Systembus (14) zu kommunizieren, wobei der erste Systembus und der zweite Systembus die gleiche Norm haben, **dadurch gekennzeichnet, dass** die Signalleitungen des MFHS-Busses eine Takt-Signalleitung, eine Status-Signalleitung, eine Bereit-Signalleitung und mehrere Inhalts-Signalleitungen enthalten und die Inhalts-Signalleitungen ein Steuersignal, ein Adressensignal und ein Datensignal übertragen.

2. Elektronisches Hauptgerät nach Anspruch 1, wobei die Anzahl der Inhalts-Signalleitungen gleich 8 ist.

3. Elektronisches Hauptgerät nach Anspruch 1, wobei die Host-Steuereinheit die Status-Signalleitung des MFHS-Busses freigibt, wenn die Host-Steuereinheit einen Befehlsadressenzyklus an die Client-Steuereinheit überträgt; der Befehlsadressenzyklus ein Steuersignal und ein Adressensignal enthält; das Steuersignal wenigstens einen Byte-Freigabemodus und einen Zugriffsmodus enthält und der Zugriffsmodus ein Schreibmodus oder ein Lesemodus ist.

4. Elektronisches Hauptgerät nach Anspruch 1, wobei die Host-Steuereinheit die Status-Signalleitung des MFHS-Busses freigibt, wenn die Host-Steuereinheit einen Befehlsadressenzyklus an die Client-Steuereinheit überträgt; und wenn der Zugriffsmodus des Steuersignals des Befehlsadressenzyklus ein Lesemodus ist, die Client-Steuereinheit in Übereinstimmung mit der Datenausgabe der Erweiterungsvorrichtung einen Datenschreibzyklus an die Host-Steuereinheit überträgt und die Bereit-Signalleitung freigegeben wird.

5. Elektronisches Hauptgerät nach Anspruch 1, wobei die Host-Steuereinheit die Status-Signalleitung des MFHS-Busses freigibt, wenn die Host-Steuereinheit einen Befehlsadressenzyklus an die Client-Steuereinheit überträgt; der Befehlsadressenzyklus ein Steuersignal und ein Adressensignal enthält; und dann, wenn der Zugriffsmodus des Steuersignals ein Schreibmodus ist, die Client-Steuereinheit die Bereit-Signalleitung in Übereinstimmung mit der Erweiterungsvorrichtung freigibt, um anzugeben, dass der Schreibmodus abgeschlossen ist.

6. Elektronisches Hauptgerät nach Anspruch 1, wobei die Client-Steuereinheit mit der Erweiterungsvorrichtung über den zweiten Systembus kommuniziert, der R Signalleitungen enthält, wobei R eine positive ganze Zahl ist und R > Q.

7. Elektronisches Hauptgerät nach Anspruch 6, wobei die Client-Steuereinheit eine Brücke für die Signale von den R Signalleitungen des zweiten Systembusses und für die Signale von den Q Signalleitungen des MFHS-Busses bildet.

8. Leseverfahren für ein tragbares elektronisches System mit einem MFHS-Bus, wobei das tragbare elektronische System ein elektronisches Hauptgerät nach Anspruch 1, ein Erweiterungspack und eine Erweiterungsvorrichtung enthält, wobei das elektronische Hauptgerät mit dem Erweiterungspack über den MFHS-Bus verbunden ist; das elektronische Hauptgerät eine CPU und eine Host-Steuereinheit enthält, die mit der CPU über einen ersten Systembus verbunden ist; das Erweiterungspack eine Client-Steuereinheit enthält, die mit der Host-Steuereinheit über den MFHS-Bus verbunden ist und mit der Erweiterungsvorrichtung über einen zweiten Systembus verbunden ist; und der MFHS-Bus eine Takt-Signalleitung, eine Statusleitung, eine Bereit-Signalleitung und mehrere Inhalts-Signalleitungen enthält, wobei das Leseverfahren enthält: Ausgeben eines ersten Befehlsadressenzyklus von der CPU zu dem ersten Systembus; Empfangen des ersten Befehlsadressenzyklus, der von dem ersten Systembus ausgegeben wird, in M Taktzyklen durch die Host-Steuereinheit, Transformieren des ersten Befehlsadressenzyklus in einen zweiten Befehlsadressenzyklus durch die Host-Steuereinheit und Übertragen des zweiten Befehlsadressenzyklus durch den MFHS-Bus in N Taktzyklen, um dadurch die Status-Signalleitung des MFHS-Busses freizugeben, wobei N > M; Empfangen des zweiten Befehlsadressenzyklus durch die Client-Steuereinheit, wenn die Status-Signalleitung freigegeben ist; Transformieren des zweiten Befehlsadressenzyklus in einen dritten Befehlsadressenzyklus durch die Client-Steuereinheit und Übertragen eines dritten Befehlsadressenzyklus über eine erste Menge aus P Client-Signalleitungen in K Taktzyklen, wobei K eine positive ganze Zahl ist; und Übertragen des dritten Befehlsadressenzyklus an die Erweiterungsvorrichtung durch den zweiten Systembus.

9. Leseverfahren nach Anspruch 8, wobei der erste Befehlsadressenzyklus ein Steuersignal und ein Adressensignal enthält; und der Zugriffsmodus des Steuersignals ein Lesemodus ist.

10. Leseverfahren nach Anspruch 8, wobei dann, wenn die Host-Steuereinheit den ersten Befehlsadressenzyklus empfängt, die Host-Steuereinheit ein Pausensignal an die CPU überträgt.

11. Leseverfahren nach Anspruch 8, das ferner enthält: Ausgeben von Daten an den zweiten Systembus in Übereinstimmung mit dem dritten Befehlsadressenzyklus durch die Erweiterungsvorrichtung; Empfangen der Daten und Transformieren der Daten in einen ersten Datenlesezyklus durch die Client-Steuereinheit; Übertragen des ersten Datenlesezyklus über den MFHS-Bus, wodurch die Bereit-Signalleitung des MFHS-Busses freigegeben wird; Empfangen des ersten Datenlesezyklus in Übereinstimmung mit der freigegebenen Bereit-Signalleitung des MFHS-Busses durch die Host-Steuereinheit; Transformieren des ersten Datenlesezyklus in einen zweiten Datenlesezyklus durch die Host-Steuereinheit; und Übertragen des zweiten Datenlesezyklus an die CPU über den ersten Systembus.

12. Leseverfahren nach Anspruch 11, wobei dann, wenn die Host-Steuereinheit den ersten Datenlesezyklus empfängt, die Host-Steuereinheit die CPU freigibt.

13. Schreibverfahren eines tragbaren elektronischen Systems mit einem MFHS-Bus, wobei das tragbare elektronische System ein elektronisches Hauptgerät nach Anspruch 1, ein Erweiterungspack und eine Erweiterungsvorrichtung enthält, wobei das elektronische Hauptgerät mit dem Erweiterungspack über den MFHS-Bus verbunden ist; das elektronische Hauptgerät eine CPU und eine Host-Steuereinheit enthält, die mit der CPU über einen ersten Systembus verbunden ist; das Erweiterungspack eine Client-Steuereinheit enthält, die mit der Host-Steuereinheit über den MFHS-Bus verbunden ist und mit der Erweiterungsvorrichtung über einen zweiten Systembus verbunden ist; und der MFHS-Bus eine Takt-Signalleitung, eine Statusleitung, eine Bereit-Signalleitung und mehrere Inhalts-Signalleitungen enthält, wobei das Schreibverfahren enthält: Ausgeben eines ersten Befehlsadressenzyklus und eines ersten Datenschreibzyklus von der CPU an den ersten Systembus; Empfangen des ersten Befehlsadressenzyklus und des ersten Schreibzyklus in M Taktzyklen durch die Host-Steuereinheit, wobei M eine positive ganze Zahl ist; Transformieren des ersten Befehlsadressenzyklus in einen zweiten Befehlsadressenzyklus, Transformieren des ersten Datenschreibzyklus in einen zweiten Datenschreibzyklus durch die Host-Steuereinheit und Übertragen des zweiten Befehlsadressenzyklus und des zweiten Datenschreibzyklus an den MFHS-Bus in N Taktzyklen, wobei N eine positive ganze Zahl ist und N > M; Empfangen des zweiten Befehlsadressenzyklus und des zweiten Datenschreibzyklus durch die Client-Steuereinheit, wenn die Status-Signalleitung freigegeben ist; und Transformieren des zweiten Befehlsadressenzyklus in einen dritten Befehlsadressenzyklus, Transformieren des zweiten Datenschreibzyklus in einen dritten Datenschreibzyklus durch die Client-Steuereinheit und Übertragen des dritten Befehlsadressenzyklus und des dritten Datenschreibzyklus über den zweiten Systembus in K Taktzyklen, wobei K eine positive ganze Zahl ist.

14. Schreibverfahren nach Anspruch 13, das ferner enthält: Schreiben der Daten des dritten Datenschreibzyklus in Übereinstimmung mit dem dritten Befehlsadressenzyklus durch die Erweiterungsvorrichtung und Antworten mit einem Schreibabschlusssignal an die Client-Steuereinheit; und Freigeben der Bereit-Signalleitung des MFHS-Busses in Übereinstimmung mit dem Schreibabschlusssignal durch die Client-Steuereinheit.

15. Schreibverfahren nach Anspruch 14, das ferner enthält: Übertragen eines Schreibzyklus-Abschlusssignals an die CPU in Übereinstimmung mit der freigegebenen Bereit-Signalleitung durch die Host-Steuereinheit.

16. Schreibverfahren nach Anspruch 14, wobei dann, wenn die Host-Steuereinheit den ersten Befehlsadressenzyklus und den ersten Datenschreibzyklus empfängt, die Host-Steuereinheit ein Pausensignal an die CPU überträgt.

17. Verfahren nach Anspruch 16, wobei die Host-Steuereinheit die CPU freigibt, nachdem die Bereit-Signalleitung freigegeben worden ist.

18. Verfahren nach Anspruch 15, wobei dann, wenn die Host-Steuereinheit den ersten Befehlsadressenzyklus und den ersten Datenschreibzyklus empfängt, die Host-Steuereinheit prüft, ob der erste Befehlszyklus und der erste Datenschreibzyklus für einen Burst-Schreibvorgang vorgesehen sind; und wobei dann, wenn der erste Befehlszyklus und der erste Datenschreibzyklus für einen Burst-Schreibvorgang vorgesehen sind, das Schreibverfahren wiederholt wird, um die Daten des Burst-Schreibvorgangs in die Erweiterungsvorrichtung zu schreiben.

19. Schreibverfahren eines tragbaren elektronischen Systems mit einem MFHS-Bus, wobei das tragbare elektronische System ein elektronisches Hauptgerät nach Anspruch 1, ein Erweiterungspack und eine Erweiterungsvorrichtung enthält, wobei das elektronische Hauptgerät mit dem Erweiterungspack über den MFHS-Bus verbunden ist; das elektronische Hauptgerät eine CPU und eine Host-Steuereinheit enthält, die mit der CPU über einen ersten Systembus verbunden ist; das Erweiterungspack eine Client-Steuereinheit enthält, die mit der Host-Steuereinheit über den MFHS-Bus verbunden ist und mit der Erweiterungsvorrichtung über einen zweiten Systembus verbunden ist; und der MFHS-Bus eine Takt-Signalleitung, eine Statusleitung, eine Bereit-Signalleitung und mehrere Inhalts-Signalleitungen enthält, wobei das Schreibverfahren enthält: Ausgeben eines ersten Befehlsadressenzyklus und eines ersten Datenschreibzyklus von der CPU an den ersten Systembus, wobei der erste Befehlsadressenzyklus ein Burst-Schreibzyklus ist; Empfangen des ersten Befehlsadressenzyklus und des ersten Datenschreibzyklus, die von dem ersten Systembus ausgegeben werden, in M Taktzyklen durch die Host-Steuereinheit, wobei M eine positive ganze Zahl ist; Bestimmen einer Schreibadresse durch die Host-Steuereinheit; Transformieren des ersten Befehlsadressenzyklus in einen zweiten Befehlsadressenzyklus in Übereinstimmung mit der Schreibadresse und Transformieren des ersten Datenschreibzyklus in einen zweiten Datenschreibzyklus durch die Host-Steuereinheit und Ausgeben des zweiten Befehlsadressenzyklus und des zweiten Datenschreibzyklus über den MFHS-Bus in N Taktzyklen, wobei N eine positive ganze Zahl und N > M; Empfangen des zweiten Befehlsadressenzyklus und des zweiten Datenschreibzyklus durch die Client-Steuereinheit, wenn die Status-Signalleitung freigegeben ist; Transformieren des zweiten Befehlsadressenzyklus in einen dritten Befehlsadressenzyklus, Transformieren des zweiten Datenschreibzyklus in einen dritten Datenschreibzyklus durch die Client-Steuereinheit und Übertragen des dritten Befehlsadressenzyklus und des dritten Datenschreibzyklus über den zweiten Systembus in K Taktzyklen, wobei K eine positive ganze Zahl ist; Schreiben der Daten des dritten Datenschreibzyklus in Übereinstimmung mit dem dritten Befehlsadressenzyklus durch die Erweiterungsvorrichtung und Antworten mit einem Schreibabschlusssignal an die Client-Steuereinheit; Freigeben der Bereit-Signalleitung des MFHS-Busses in Übereinstimmung mit dem Schreibabschlusssignal durch die Client-Steuereinheit; und Bestimmen, ob der Burst-Schreibzyklus abgeschlossen ist, durch Prüfen der freigegebenen Bereit-Signalleitung durch die Host-Steuereinheit; und falls der Burst-Schreibzyklus nicht abgeschlossen ist, Zurückkehren zu dem Schritt des Bestimmens der Schreibadresse; falls der Burst-Schreibzyklus abgeschlossen ist, Übertragen eines Schreibzyklus-Abschlusssignals durch die Host-Steuereinheit an die CPU.

20. Schreibverfahren nach Anspruch 19, wobei dann, wenn die Host-Steuereinheit den ersten Befehlsadressenzyklus und den ersten Datenschreibzyklus empfängt, die Host-Steuereinheit ein Pausensignal an die CPU überträgt.

21. Schreibverfahren nach Anspruch 20, wobei die Host-Steuereinheit die CPU freigibt, nachdem der Burst-Schreibvorgang abgeschlossen worden ist.

## Revendications

1. Appareil électronique principal d'un dispositif électronique portable permettant une connexion à un module d'extension, l'appareil électronique principal comprenant : une unité centrale de traitement (CPU) ; un premier bus de système (22) relié électriquement à la CPU et comportant P lignes de signaux, P étant un nombre entier positif ; un bus à grande vitesse multifonction (MFHS) comportant Q lignes de signaux, Q étant un nombre entier positif et Q<P ; et un régisseur hôte pour communiquer avec la CPU par l'intermédiaire du premier bus de système et avec le module d'extension par l'intermédiaire du bus MFHS ; le régisseur hôte reliant les signaux présents sur les P lignes de signaux du premier bus de système et sur les Q lignes de signaux du bus MFHS et transférant M signaux d'horloge du premier bus de système au bus MFHS en N cycles d'horloge, N étant un nombre entier positif et N>M ; le module d'extension étant connecté à l'appareil électronique principal de manière amovible et à un dispositif d'extension pour étendre les fonctions du dispositif électronique portable et comprenant un régisseur client pour communiquer avec le dispositif électronique portable par l'intermédiaire du bus MFHS afin de réduire la taille du dispositif électronique portable et avec le dispositif d'extension par l'intermédiaire d'un second bus de système (14), le premier bus de système et le second bus de système ayant la même norme, **caractérisé en ce que** les lignes de signal du bus MFHS comprennent une ligne de signal d'horloge, une ligne de signal d'état, une ligne de signal de disponibilité et de multiples lignes de signal de contenu, et **en ce que** les lignes de signal de contenu transmettent un signal de commande, un signal d'adressage et un signal de données.

2. Appareil électronique principal selon la revendication 1, dans lequel le nombre de lignes de signal de contenu est de 8.

3. Appareil électronique principal selon la revendication 1, dans lequel le régisseur hôte active la ligne de signal d'état du bus MFHS lorsqu'il transfère un cycle d'adressage d'instruction au régisseur client ; le cycle d'adressage d'instruction comprenant un signal de commande et un signal d'adressage ; et le signal de commande comprenant au moins un mode d'activation par octet et un mode d'accès, mode d'accès qui est un mode d'écriture ou un mode de lecture.

4. Appareil électronique principal selon la revendication 1, dans lequel le régisseur hôte active la ligne de signal d'état du bus MFHS lorsqu'il transfère un cycle d'adressage d'instruction au régisseur client ; et, lorsque le mode d'accès du signal de commande du cycle d'adressage d'instruction est un mode de lecture, le régisseur client transfère un cycle d'écriture de données au régisseur hôte en fonction des données fournies à partir du dispositif d'extension et la ligne de signal de disponibilité est activée.

5. Appareil électronique principal selon la revendication 1, dans lequel le régisseur hôte active la ligne de signal d'état du bus MFHS lorsqu'il transfère un cycle d'adressage d'instruction au régisseur client ; le cycle d'adressage d'instruction comprenant un signal de commande et un signal d'adressage ; et, lorsque le mode d'accès du signal de commande est un mode d'écriture, le régisseur client active la ligne de signal de disponibilité en fonction du dispositif d'extension afin d'indiquer que le mode d'écriture est exécuté.

6. Appareil électronique principal selon la revendication 1, dans lequel le régisseur client communique avec le dispositif d'extension par l'intermédiaire du second bus de système qui comprend R lignes de signal, R étant un nombre entier positif et R>Q.

7. Appareil électronique principal selon la revendication 6, dans lequel le régisseur client relie les signaux provenant des R lignes de signal du second bus de système et les signaux provenant des Q lignes de signal du bus MFHS.

8. Procédé de lecture d'un système électronique portable équipé d'un bus MFHS, système électronique portable qui comprend un appareil électronique principal selon la revendication 1, un module d'extension et un dispositif d'extension, l'appareil électronique principal étant relié au module d'extension par le bus MFHS ; l'appareil électronique principal comprenant une CPU et un régisseur hôte relié à la CPU par un premier bus de système ; le module d'extension comprenant un régisseur client relié au régisseur hôte par le bus MFHS et au dispositif d'extension par un second bus de système ; et le bus MFHS comprenant une ligne de signal d'horloge, une ligne d'état, une ligne de signal de disponibilité et de multiples lignes de signal de contenu, le procédé de lecture comprenant : la fourniture d'un premier cycle d'adressage d'instruction au premier bus de système à partir de la CPU ; la réception par le régisseur hôte du premier cycle d'adressage d'instruction fourni à partir du premier bus de système en M cycles d'horloge ; la transformation du premier cycle d'adressage d'instruction en un deuxième cycle d'adressage d'instruction par le régisseur hôte et le transfert du deuxième cycle d'adressage d'instruction par l'intermédiaire du bus MFHS en N cycles d'horloge, pour ainsi activer la ligne de signal d'état du bus MFHS, où N>M ; la réception du deuxième cycle d'adressage d'instruction par le régisseur client lorsque la ligne de signal d'état est activée ; la transformation du deuxième cycle d'adressage d'instruction en un troisième cycle d'adressage d'instruction par le régisseur client et le transfert du troisième cycle d'adressage d'instruction par l'intermédiaire d'un premier groupe de P lignes de signal client en K cycles d'horloge, K étant un nombre entier positif ; et le transfert du troisième cycle d'adressage d'instruction au dispositif d'extension par le second bus de système.

9. Procédé de lecture selon la revendication 8, dans lequel le premier cycle d'adressage d'instruction comprend un signal de commande et un signal d'adressage, le mode d'accès du signal de commande étant un mode de lecture.

10. Procédé de lecture selon la revendication 8, dans lequel, lorsque le régisseur hôte reçoit le premier cycle d'adressage d'instruction, il transmet un signal de pause à la CPU.

11. Procédé de lecture selon la revendication 8, comprenant également : la fourniture de données au second bus de système en fonction du troisième cycle d'adressage d'instruction par le dispositif d'extension ; la réception des données et leur transformation en un premier cycle de lecture de données par le régisseur client ; le transfert du premier cycle de lecture de données par le bus MFHS pour qu'ainsi la ligne de signal de disponibilité du bus MFHS soit activée ; la réception par le régisseur hôte du premier cycle de lecture de données en fonction de la ligne de signal de disponibilité activée du bus MFHS ; la transformation du premier cycle de lecture de données en un second cycle de lecture de données par le régisseur hôte ; et le transfert du second cycle de lecture de données à la CPU par le premier bus de système.

12. Procédé de lecture selon la revendication 11, dans lequel, lorsque le régisseur hôte reçoit le premier cycle de lecture de données, il active la CPU.

13. Procédé d'écriture d'un système électronique portable équipé d'un bus MFHS, système électronique portable qui comprend un appareil électronique principal selon la revendication 1, un module d'extension et un dispositif d'extension, l'appareil électronique principal étant relié au module d'extension par le bus MFHS ; l'appareil électronique principal comprenant une CPU et un régisseur hôte relié à la CPU par un premier bus de système ; le module d'extension comprenant un régisseur client relié au régisseur hôte par le bus MFHS et au dispositif d'extension par un second bus de système ; et le bus MFHS comprenant une ligne de signal d'horloge, une ligne d'état, une ligne de signal de disponibilité et de multiples lignes de signal de contenu, le procédé d'écriture comprenant : la fourniture d'un premier cycle d'adressage d'instruction et d'un premier cycle d'écriture de données au premier bus de système à partir de la CPU ; la réception du premier cycle d'adressage d'instruction et du premier cycle d'écriture en M cycles d'horloge par le régisseur hôte, M étant un nombre entier positif ; la transformation du premier cycle d'adressage d'instruction en un deuxième cycle d'adressage d'instruction, la transformation du premier cycle d'écriture de données en un deuxième cycle d'écriture de données par le régisseur hôte, et le transfert du deuxième cycle d'adressage d'instruction et du deuxième cycle d'écriture de données au bus MFHS en N cycles d'horloge, N étant un nombre entier positif et N>M ; la réception du deuxième cycle d'adressage d'instruction et du deuxième cycle d'écriture de données par le régisseur client, lorsque la ligne de signal d'état est activée ; et la transformation du deuxième cycle d'adressage d'instruction en un troisième cycle d'adressage d'instruction, la transformation du deuxième cycle d'écriture de données en un troisième cycle d'écriture de données par le régisseur client, et le transfert du troisième cycle d'adressage d'instruction et du troisième cycle d'écriture de données par l'intermédiaire du second bus de système en K cycles d'horloge, K étant un nombre entier positif.

14. Procédé d'écriture selon la revendication 13, comprenant également : l'écriture des données du troisième cycle d'écriture de données en fonction du troisième cycle d'adressage d'instruction par le dispositif d'extension, et la fourniture en réponse d'un signal d'exécution d'écriture au régisseur client ; et l'activation par le régisseur client de la ligne de signal de disponibilité du bus MFHS en fonction du signal d'exécution d'écriture.

15. Procédé d'écriture selon la revendication 14, comprenant également : le transfert par le régisseur hôte d'un signal d'exécution de cycle d'écriture à la CPU en fonction de la ligne de signal de disponibilité activée.

16. Procédé d'écriture selon la revendication 14, dans lequel, lorsque le régisseur hôte reçoit le premier cycle d'adressage d'instruction et le premier cycle d'écriture de données, il transmet un signal de pause à la CPU.

17. Procédé selon la revendication 16, dans lequel, le régisseur hôte active la CPU après que la ligne de signal de disponibilité a été activée.

18. Procédé selon la revendication 15, dans lequel, lorsque le régisseur hôte reçoit le premier cycle d'adressage d'instruction et le premier cycle d'écriture de données, il vérifie si le premier cycle d'adressage d'instruction et le premier cycle d'écriture de données correspondent à une écriture en mode salve ; et si le premier cycle d'adressage d'instruction et le premier cycle d'écriture de données correspondent à une écriture en mode salve, le procédé d'écriture est répété pour écrire les données de l'écriture en mode salve dans le dispositif d'extension.

19. Procédé d'écriture d'un système électronique portable équipé d'un bus MFHS, système électronique portable qui comprend un appareil électronique principal selon la revendication 1, un module d'extension et un dispositif d'extension, l'appareil électronique principal étant relié au module d'extension par le bus MFHS ; l'appareil électronique principal comprenant une CPU et un régisseur hôte relié à la CPU par un premier bus de système ; le module d'extension comprenant un régisseur client relié au régisseur hôte par le bus MFHS et au dispositif d'extension par un second bus de système ; et le bus MFHS comprenant une ligne de signal d'horloge, une ligne d'état, une ligne de signal de disponibilité et de multiples lignes de signal de contenu, le procédé d'écriture comprenant : la fourniture d'un premier cycle d'adressage d'instruction et d'un premier cycle d'écriture de données au premier bus de système à partir de la CPU, le premier cycle d'adressage d'instruction étant un cycle d'écriture en mode salve ; la réception par le régisseur hôte du premier cycle d'adressage d'instruction et du premier cycle d'écriture de données fournis à partir du premier bus de système en M cycles d'horloge, M étant un nombre entier positif ; la décision d'une adresse d'écriture par le régisseur hôte ; la transformation du premier cycle d'adressage d'instruction en un deuxième cycle d'adressage d'instruction en fonction de l'adresse d'écriture et la transformation du premier cycle d'écriture de données en un deuxième cycle d'écriture de données par le régisseur hôte, et la fourniture du deuxième cycle d'adressage d'instruction et du deuxième cycle d'écriture de données par l'intermédiaire du bus MFHS en N cycles d'horloge, N étant un nombre entier positif et N>M ; la réception du deuxième cycle d'adressage d'instruction et du deuxième cycle d'écriture de données par le régisseur client lorsque la ligne de signal d'état est activée ; la transformation du deuxième cycle d'adressage d'instruction en un troisième cycle d'adressage d'instruction, la transformation du deuxième cycle d'écriture de données en un troisième cycle d'écriture de données par le régisseur hôte, et le transfert du troisième cycle d'adressage d'instruction et du troisième cycle d'écriture de données par l'intermédiaire du second bus de système en K cycles d'horloge, K étant un nombre entier positif ; l'écriture des données du troisième cycle d'écriture de données en fonction du troisième cycle d'adressage d'instruction par le dispositif d'extension, et la fourniture en réponse d'un signal d'exécution d'écriture au régisseur client ; l'activation de la ligne de signal de disponibilité du bus MFHS en fonction du signal d'exécution d'écriture par le régisseur client ; et la détermination par le régisseur hôte de l'exécution ou de la non-exécution du cycle d'écriture en mode salve par la vérification de la ligne de signal de disponibilité activée ; et, en cas de non-exécution du cycle d'écriture en mode salve, le retour à l'étape de décision de l'adresse d'écriture, et, en cas d'exécution du cycle d'écriture en mode salve, le transfert par le régisseur hôte d'un signal d'exécution de cycle d'écriture à la CPU.

20. Procédé d'écriture selon la revendication 19, dans lequel, lorsque le régisseur hôte reçoit le premier cycle d'adressage d'instruction et le premier cycle d'écriture de données, il transmet un signal de pause à la CPU.

21. Procédé d'écriture selon la revendication 20, dans lequel le régisseur hôte active la CPU après que l'écriture en mode salve a été exécutée.
